# EUROPEAN PATENT APPLICATION

(11) **EP 4 723 793 A1**
(43) Date of publication of application: **08.04.2026**
(21) Application number: 24835175.1
(22) Date of filing: 04.06.2024
(51) Int. Cl.: H04W 76/14, H04W 88/04

(54) **COMMUNICATION METHOD, APPARATUS, AND SYSTEM**

(30) Priority: 04.07.2023 CN 202310814810; 07.08.2023 CN 202310986878
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN); WANG, Rui, Shenzhen, Guangdong 518129 (CN)
(74) Representative: Epping - Hermann - Fischer
(86) International application number: PCT/CN2024/097299
(87) International publication number: WO 2025/007692

(57) **Abstract**

This application relates to a communication method, an apparatus, and a system. A first terminal device sends first information to a network device, where the first information indicates an identifier of at least one second terminal device corresponding to the first terminal device, and the identifier of the at least one second terminal device is for configuring or deconfiguring, by the network device, the first terminal device to perform multipath communication based on a non-3GPP communication interface between the first terminal device and the at least one second terminal device. Through reporting by the first terminal device, the network device can obtain the identifier of the second terminal device that communicates with the first terminal device through a non-3GPP connection, so that the network device can configure the first terminal device to implement UE aggregation with the second terminal device, to improve a throughput of the first terminal device.

## Description

### CROSS-REFERENCE TO RELATED APPLICATIONS

This application claims priorities to Chinese Patent Application No. 202310814810.X, filed with the China National Intellectual Property Administration on July 4, 2023 and entitled "UE AGGREGATION CONFIGURATION METHOD AND DEVICE", and to Chinese Patent Application No. 202310986878.6, filed with the China National Intellectual Property Administration on August 7, 2023 and entitled "COMMUNICATION METHOD, APPARATUS, AND SYSTEM", both of which are incorporated herein by reference in their entireties.

### TECHNICAL FIELD

This application relates to the field of communication technologies, and in particular, to a communication method, an apparatus, and a system.

### BACKGROUND

In a sidelink (sidelink, SL) relay (relay) scenario, remote (remote) user equipment (user equipment, UE) is connected to a relay UE through a PC5 interface. In other words, the remote UE communicates with the relay UE based on an SL technology. In the scenario, dual connectivity of an indirect path and a direct path may be supported. To be specific, the remote UE communicates with a base station through the relay UE, and can also directly communicate with the base station through a Uu interface, to improve a data transmission rate or reliability of the remote UE.

In addition to being connected through an SL, two UEs can also be connected through a non-3rd generation partnership project (non-3rd generation partnership project, N3GPP) interface. Therefore, currently, supporting the remote UE in ideal connection to the relay UE through an N3GPP interface is also expected, to enable a network to serve the remote UE through both the Uu interface of the remote UE and the N3GPP interface between the relay UE and the remote UE. Such a communication mode is referred to as UE aggregation.

However, when the remote UE is connected to the relay UE through the N3GPP interface, the network cannot learn of a situation of the N3GPP interface. Consequently, the remote UE cannot be configured to communicate with the base station through the Uu interface while communicating with the base station through the relay UE over the N3GPP interface. In other words, the communication mode of UE aggregation cannot be configured.

### SUMMARY

Embodiments of this application provide a communication method, an apparatus, and a system, so that a network device can configure a communication mode of UE aggregation.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: sending first information to a network device, where the first information indicates an identifier of at least one second terminal device corresponding to the first terminal device, and the identifier of the at least one second terminal device is for configuring or deconfiguring, by the network device, the first terminal device to perform multipath communication based on an N3GPP communication interface between the first terminal device and the at least one second terminal device.

In embodiments of this application, through reporting by the first terminal device, the network device can obtain the identifier of the second terminal device that communicates with the first terminal device through an N3GPP connection, so that the network device can configure the first terminal device to implement UE aggregation with the second terminal device, to improve a throughput of the first terminal device.

In an optional implementation, the first information is included in capability information of the first terminal device; the first information is included in UE assistance information; or the first information is included in a measurement report. The first terminal device may send the first information to the network device in different manners, which is flexible.

In an optional implementation, the capability information further indicates that the first terminal device supports a capability of performing multipath communication based on a non-3GPP communication interface, or indicates that the first terminal device has a capability of UE aggregation. In addition to including the first information, the capability information may further indicate more content, so that the network device can determine more capabilities of the first terminal device.

In an optional implementation, the capability information is included in a UE capability information message or included in an RRC connection setup complete message.

In an optional implementation, before sending the first information to the network device, the method further includes: receiving second information from the network device, where the second information is for requesting the capability information of the first terminal device, the second information is for configuring to allow the first terminal device to send the first information, or the second information is for configuring a condition for sending the first information by the first terminal device. For example, the first information may be used as a response to the second information, or the first information may be sent based on the condition configured by using the second information.

In an optional implementation, the condition for sending the first information by the first terminal device includes one or more of the following items: The first terminal device receives second information from the network device; a data volume to be transmitted by the first terminal device is greater than or equal to a first threshold; a data transmission rate expected by the first terminal device is greater than or equal to a second threshold; a status of a non-3GPP connection between the first terminal device and the at least one second terminal device changes; the first terminal device has a valid non-3GPP connection; the first terminal device has no valid non-3GPP connection; a data transmission rate of a valid non-3GPP connection of the first terminal device is greater than or greater than or equal to a third threshold; a data transmission rate of a valid non-3GPP connection of the first terminal device is less than a fourth threshold; or a data transmission rate of the first terminal device is greater than or equal to a fifth threshold. In addition, the condition for sending the first information by the first terminal device may further include another item. This is not specifically limited.

In an optional implementation, that the status of the non-3GPP connection between the first terminal device and the at least one second terminal device changes includes one or more of the following items: A data transmission rate of the non-3GPP connection between the first terminal device and the at least one second terminal device increases or decreases; the non-3GPP connection between the first terminal device and the at least one second terminal device is disconnected; the non-3GPP connection between the first terminal device and the at least one second terminal device fails; the first terminal device expects to disconnect the non-3GPP connection between the first terminal device and the at least one second terminal device; the first terminal device expects to change a terminal device participating in UE aggregation to the at least one second terminal device; or a terminal device corresponding to a non-3GPP connection of the first terminal device is changed to the at least one second terminal device. The change of the status of the non-3GPP connection includes a plurality of situations, and may also include another situation in addition to the foregoing listed situations.

In an optional implementation, when the change of the status of the non-3GPP connection between the first terminal device and the at least one second terminal device includes at least one of M items, that the first information indicates the identifier of the at least one second terminal device corresponding to the first terminal device includes: The first information does not include the identifier of the at least one second terminal device; the first information includes the identifier of the at least one second terminal device; or the first information includes a bitmap, and a value of a bit that is in the bitmap and that corresponds to the at least one second terminal device is a first value. The M items include: A transmission rate of the non-3GPP connection between the first terminal device and the at least one second terminal device increases or decreases; the non-3GPP connection between the first terminal device and the at least one second terminal device is disconnected; the non-3GPP connection between the first terminal device and the at least one second terminal device fails; or the first terminal device expects to disconnect the non-3GPP connection between the first terminal device and the at least one second terminal device. The first information may indicate the second terminal device by including the identifier of the second terminal device, so that an indication manner is clear. Alternatively, the first information may indicate the second terminal device by not including the identifier of the second terminal device, or indicate the second terminal device in a form of the bitmap, to help reduce overheads of the first information.

In an optional implementation, the second information is included in a first RRC message, where the first RRC message includes an OtherConfig information element, and the second information is included in the OtherConfig information element; or the first RRC message includes measurement configuration information, and the second information is included in the measurement configuration information. A distribution manner of the second information in the message is not limited.

In an optional implementation, the method further includes: receiving third information from the network device, where the third information indicates the first terminal device to perform UE aggregation with a part or all of the at least one second terminal device. If the network device determines that the first terminal device performs UE aggregation with the part or all of the at least one second terminal device, the network device may indicate the first terminal device, so that the first terminal device can perform UE aggregation with the part or all of the at least one second terminal device.

According to a second aspect, a second communication method is provided. The method may be performed by a network device, may be performed by another device including functions of the network device, or may be performed by a chip system (or a chip) or another functional module. The chip system or the functional module can implement the functions of the network device, and the chip system or the functional module is, for example, disposed in the network device. The network device is, for example, an access network device. For example, an implementation of the access network device is a base station. The method includes: receiving first information from a first terminal device, where the first information indicates an identifier of at least one second terminal device corresponding to the first terminal device, and the identifier of the at least one second terminal device is for configuring or deconfiguring, by the network device, the first terminal device to perform multipath communication based on a non-3GPP communication interface between the first terminal device and the at least one second terminal device.

In an optional implementation, the first information is included in capability information of the first terminal device; the first information is included in UE assistance information; or the first information is included in a measurement report.

In an optional implementation, the capability information further indicates that the first terminal device supports a capability of performing multipath communication based on a non-3GPP communication interface, or indicates that the first terminal device has a capability of UE aggregation.

In an optional implementation, the capability information is included in a UE capability information message or included in an RRC connection setup complete message.

In an optional implementation, before receiving the first information from the first terminal device, the method further includes: sending second information to the first terminal device, where the second information is for requesting the capability information of the first terminal device, the second information is for configuring to allow the first terminal device to send the first information, or the second information is for configuring a condition for sending the first information by the first terminal device.

In an optional implementation, the condition for sending the first information by the first terminal device includes one or more of the following items: The first terminal device receives second information from the network device; a data volume to be transmitted by the first terminal device is greater than or equal to a first threshold; a data transmission rate expected by the first terminal device is greater than or equal to a second threshold; a status of a non-3GPP connection between the first terminal device and the at least one second terminal device changes; the first terminal device has a valid non-3GPP connection; the first terminal device has no valid non-3GPP connection; a data transmission rate of a valid non-3GPP connection of the first terminal device is greater than or greater than or equal to a third threshold; a data transmission rate of a valid non-3GPP connection of the first terminal device is less than a fourth threshold; or a data transmission rate of the first terminal device is greater than or equal to a fifth threshold. In an optional implementation, that the status of the non-3GPP connection between the first terminal device and the at least one second terminal device changes includes one or more of the following items: A data transmission rate of the non-3GPP connection between the first terminal device and the at least one second terminal device increases or decreases; the non-3GPP connection between the first terminal device and the at least one second terminal device is disconnected; the non-3GPP connection between the first terminal device and the at least one second terminal device fails; the first terminal device expects to disconnect the non-3GPP connection between the first terminal device and the at least one second terminal device; the first terminal device expects to change a terminal device participating in UE aggregation to the at least one second terminal device; or a terminal device corresponding to a non-3GPP connection of the first terminal device is changed to the at least one second terminal device.

In an optional implementation, when the change of the status of the non-3GPP connection between the first terminal device and the at least one second terminal device includes at least one of M items, that the first information indicates the identifier of the at least one second terminal device corresponding to the first terminal device includes: The first information does not include the identifier of the at least one second terminal device; the first information includes the identifier of the at least one second terminal device; or the first information includes a bitmap, and a value of a bit that is in the bitmap and that corresponds to the at least one second terminal device is a first value. The M items include: A transmission rate of the non-3GPP connection between the first terminal device and the at least one second terminal device increases or decreases; the non-3GPP connection between the first terminal device and the at least one second terminal device is disconnected; the non-3GPP connection between the first terminal device and the at least one second terminal device fails; or the first terminal device expects to disconnect the non-3GPP connection between the first terminal device and the at least one second terminal device.

In an optional implementation, the second information is included in a first RRC message, where the first RRC message includes an OtherConfig information element, and the second information is included in the OtherConfig information element; or the first RRC message includes measurement configuration information, and the second information is included in the measurement configuration information.

In an optional implementation, the method further includes: sending third information to the first terminal device, where the third information indicates the first terminal device to perform UE aggregation with a part or all of the at least one second terminal device.

In an optional implementation, the method further includes: sending fourth information to a part or all of the at least one second terminal device, where the fourth information indicates to perform UE aggregation the first terminal device. For the technical effects brought by the second aspect or the optional implementations, refer to the descriptions of the technical effects of the first aspect or the corresponding implementations.

According to a third aspect, a communication apparatus is provided. The communication apparatus may be the first terminal device in either of the first aspect and the second aspect. The communication apparatus has functions of the foregoing first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send first information to a network device, where the first information indicates an identifier of at least one second terminal device corresponding to the first terminal device, and the identifier of the at least one second terminal device is for configuring or deconfiguring, by the network device, the first terminal device to perform multipath communication based on a non-3GPP communication interface between the first terminal device and the at least one second terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the first terminal device in either of the first aspect and the second aspect.

According to a fourth aspect, a communication apparatus is provided. The communication apparatus may be the network device in either of the first aspect and the second aspect. The communication apparatus has functions of the network device. The communication apparatus is, for example, the network device, a large device including the network device, or a functional module, for example, a baseband apparatus or a chip system, in the network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive first information from a first terminal device, where the first information indicates an identifier of at least one second terminal device corresponding to the first terminal device, and the identifier of the at least one second terminal device is for configuring or deconfiguring, by the network device, the first terminal device to perform multipath communication based on a non-3GPP communication interface between the first terminal device and the at least one second terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the network device in either of the first aspect and the second aspect.

According to a fifth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first terminal device in the foregoing aspects.

According to a sixth aspect, a communication apparatus is provided. The communication apparatus may be a network device, or may be a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the network device in the foregoing aspects.

According to a seventh aspect, a communication system is provided, including a first terminal device and a network device. The first terminal device is configured to perform the method performed by the first terminal device in the foregoing aspects. The network device is configured to perform the method performed by the network device in the foregoing aspects. For example, the first terminal device may be implemented by using the communication apparatus in the third aspect or the fifth aspect, and the network device may be implemented by using the communication apparatus in the fourth aspect or the sixth aspect.

According to an eighth aspect, a computer-readable storage medium is provided. The computer-readable storage medium is configured to store a computer program or instructions. When the computer program or the instructions are run, the method performed by the first terminal device or the network device in the foregoing aspects is implemented.

According to a ninth aspect, a computer program product including instructions is provided. When the instructions are run on a computer, the methods in the foregoing aspects are implemented.

According to a tenth aspect, a chip system is provided, including a processor and an interface. The processor is configured to invoke instructions from the interface and run the instructions, to cause the chip system to implement the methods in the foregoing aspects.

### BRIEF DESCRIPTION OF DRAWINGS

FIG. 1 is a diagram of a dual connectivity scenario of a remote UE;
FIG. 2 is a diagram of a protocol stack in a dual connectivity scenario;
FIG. 3 is a diagram of an architecture of a UE aggregation protocol stack;
FIG. 4A and FIG. 4B are diagrams of two communication network architectures to which an embodiment of this application is applicable;
FIG. 5 to FIG. 7 are flowcharts of several communication methods according to embodiments of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns indicates "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information may be same information, or may be different information. In addition, the names do not indicate that the two pieces of information are different in transmit ends/receive ends, content, sizes, application scenarios, priorities, importance, or the like. In addition, step numbers in embodiments described in this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: a sensing scenario, cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may sometimes be referred to as a UE, a terminal, an access station, a UE station, a remote station, a wireless communication device, a user apparatus, or the like.

In embodiments of this application, a communication apparatus configured to implement functions of the terminal device may be a terminal device, or may be an apparatus that can support the terminal device in implementing the functions, for example, a chip system. The apparatus may be mounted in the terminal device. In the technical solutions provided in embodiments of this application, the technical solutions provided in embodiments of this application are described by using an example in which the apparatus configured to implement the functions of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is the base station. The base station may communicate with the terminal device, or may communicate with the terminal device through a relay station. The terminal device may communicate with the plurality of base stations in different access technologies. The core network device is configured to implement functions such as mobility management, data processing, session management, and policy and charging. Names of devices that implement core network functions in systems using the different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement functions of the network device may be a network device, or may be an apparatus that can support the network device in implementing the functions, for example, a chip system. The apparatus may be mounted in the network device. In the technical solutions provided in embodiments of this application, the technical solutions provided in embodiments of this application are described by using an example in which the apparatus configured to implement the functions of the network device is the network device.

The following describes technical features in embodiments of this application.

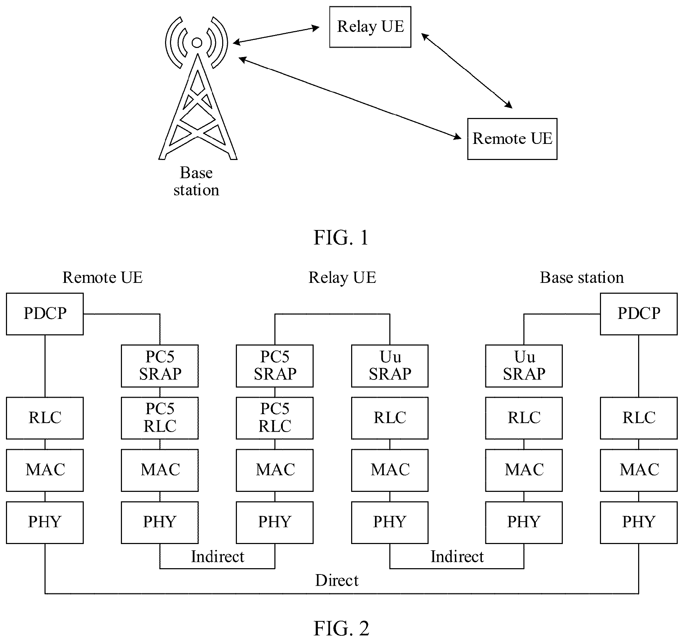

In an SL relay scenario, a remote UE is connected to a relay UE through a PC5 interface. In other words, the remote UE communicates with the relay UE based on an SL technology. In the scenario, dual connectivity of an indirect path (indirect path) and a direct path (direct path) to a base station (intra-gNB) may be supported. To be specific, the remote UE communicates with the base station through the relay UE, and can also directly communicate with the base station through a Uu interface. Refer to FIG. 1. In this case, the remote UE communicates with the relay UE based on the PC5 interface, that is, by using the SL technology. For a packet data convergence protocol (packet data convergence protocol, PDCP) entity corresponding to a same bearer, transmission may be performed by using a Uu radio link control (radio link control, RLC) bearer (bearer) in the direct path, or by using a PC5 RLC bearer or a PC5 RLC channel (channel) in the indirect path. Refer to FIG. 2. For the indirect path, the PDCP entity is interconnected with a PC5 RLC entity through a sidelink relay adaptation protocol (sidelink relay adaptation protocol, SRAP) entity, to ensure mapping (mapping) between an SL RLC bearer and the Uu interface. In addition, protocol layers further related to FIG. 2 include a media access control (media access control, MAC) layer, a physical (PHY) layer, and the like. Details are not described again.

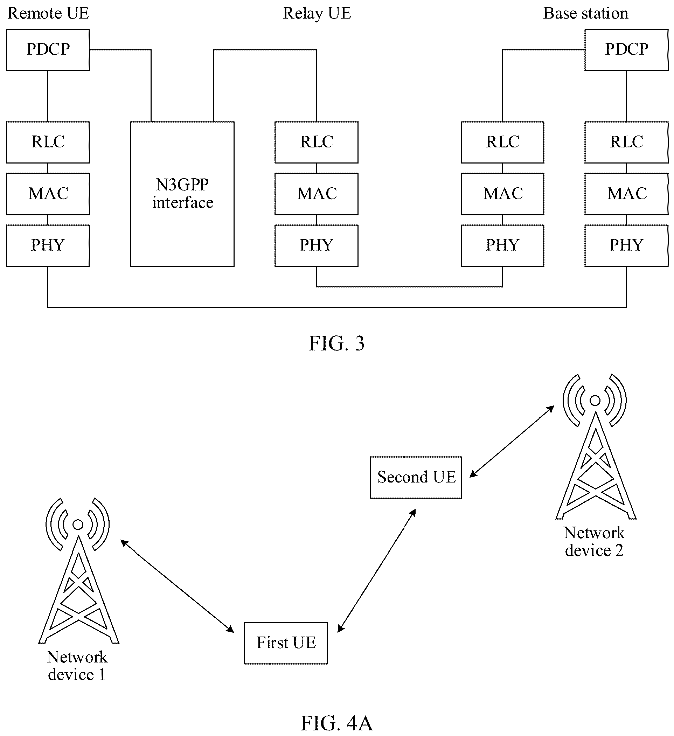

In addition to being connected through an SL, two UEs can also be connected through an N3GPP interface. For example, the two UEs may be connected in a wired manner, or the two UEs may be connected by using an air interface technology defined in an N3GPP. Therefore, currently, supporting the remote UE in ideal connection to the relay UE through an N3GPP interface is also expected, to enable a network to serve the remote UE through both the Uu interface of the remote UE and the N3GPP interface between the relay UE and the remote UE. Such a communication mode is referred to as UE aggregation or N3GPP-based multipath transmission. In the manner of UE aggregation, the remote UE may communicate with the network based on a plurality of links, to improve service reliability or a service rate of the remote UE. For a typical UE aggregation protocol stack architecture, refer to FIG. 3.

However, when the remote UE is connected to the relay UE through the N3GPP interface, the network cannot learn of a situation of the N3GPP interface between the remote UE and the relay UE. Consequently, the communication mode of UE aggregation cannot be configured.

In view of this, in embodiments of this application, through reporting by a first UE, a network device can obtain an identifier of a second UE that communicates with the first UE through an N3GPP connection, so that the network device can configure the first UE to implement UE aggregation with the second UE, to improve a throughput of the first UE.

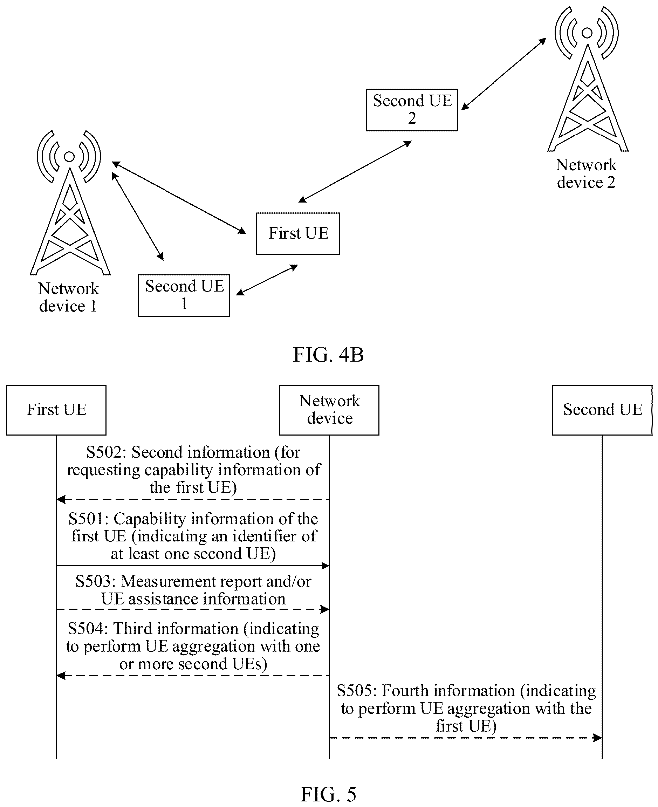

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions provided in embodiments of this application may be applied to a device-to-device (D2D) scenario, for example, an NR-D2D scenario, or may be applied to a V2X scenario, for example, an NR-V2X scenario. For example, the technical solutions provided in embodiments of this application may be applied to a field like factory manufacturing, whole-house intelligence, intelligent driving, driving assistance, or an intelligent connected vehicle. FIG. 4A and FIG. 4B show two communication network architectures to which an embodiment of this application is applicable. FIG. 4A and FIG. 4B each include a first UE, a second UE, and a network device. The first UE implements multipath communication (or UE aggregation). For example, the first UE may be connected to a network device through a Uu interface (a direct path), and may be connected to a network through one or more second UEs (an indirect path). The first UE and each of the second UEs may form one indirect path. The network device corresponding to the direct path of the first UE and the network device corresponding to the indirect path of the first UE may be a same network device, or may be different network devices. For example, in FIG. 4A, a first UE is connected to a network device 1 through a Uu interface, and is connected to a network device 2 through a second UE; and in FIG. 4B, a first UE is connected to a network device 1 through a Uu interface, is connected to the network device 1 through a second UE 1, and is further connected to a network device 2 through a second UE 2.

The first UE and the second UE may be located in coverage of a same network device, or may be located in coverage of different network devices. In FIG. 4A, that the first UE and the second UE are located in coverage of different network devices is used as an example. In FIG. 4B, that the first UE and the second UE 1 are located in coverage of a same network device, and the first UE and the second UE 2 are located in coverage of different network devices is used as an example. In addition, if a plurality of second UEs are present, different second UEs may be located in coverage of a same network device, or may be located in coverage of different network devices. For example, in FIG. 4B, the second UE 1 and the second UE 2 are located in coverage of different network devices. The network device shown in FIG. 4A or FIG. 4B is, for example, an access network device like a base station. The access network device is, for example, an integrated architecture; or may be a distributed architecture, for example, including a gNB-CU and a gNB-DU. This is not limited herein.

To better describe embodiments of this application, the following describes, with reference to the accompanying drawings, methods provided in embodiments of this application. In embodiments of this application, an N3GPP connection (or an N3GPP communication interface) includes, for example, a connection (or a communication interface) defined in a non-3GPP protocol, for example, a wireless fidelity (wireless fidelity, Wi-Fi) connection, a Bluetooth (bluetooth) connection, or a wired connection (for example, an optical fiber or a coaxial cable). In embodiments of this application, UE aggregation may also be referred to as multipath (multipath) communication. In embodiments of this application, a first UE may be understood as a type of UE, for example, a UE that can be connected to a network through another UE, or a UE that can accept a relay service. For example, the first UE is also referred to as a remote UE, or may have another name. The second UE may also be understood as a type of UE, for example, a UE that can provide a relay service. For example, the second UE is also referred to as a relay UE, or may have another name. Unless otherwise specified below, in the accompanying drawings corresponding to embodiments of this application, steps represented by dashed lines are all optional steps. The methods provided in embodiments of this application each may be applied to the network architecture shown in FIG. 4A or FIG. 4B. For example, the first UE in embodiments of this application may be the first UE in FIG. 4A or FIG. 4B, the network device in embodiments of this application may be the network device 1 that serves the first UE in FIG. 4A or FIG. 4B, and the second UE in embodiments of this application may be the second UE in FIG. 4A or FIG. 4B.

An embodiment of this application provides a communication method. FIG. 5 is a flowchart of the method.

S501: A first UE sends first information to a network device. Correspondingly, the network device receives the first information from the first UE.

The first information may indicate an identifier of at least one second UE corresponding to the first UE. The first UE communicates with each of the at least one second UE through an N3GPP connection. When S501 is performed, the first UE may have established an N3GPP connection to each of the at least one second UE; the first UE has established an N3GPP connection to none of the at least one second UE; or the first UE has established an N3GPP connection to a part of the at least one second UE, but has not established an N3GPP connection to the other part of the at least one second UE. Even if the first UE may not have established an N3GPP connection to a part of or may have established an N3GPP connection to none of the at least one second UE, the first UE has a capability of establishing an N3GPP connection to the second UE. Optionally, the first UE may determine the second UE corresponding to the first UE. In this way, the first UE can obtain the identifier of the second UE even if no N3GPP connection is established between the first UE and the second UE, so that the first information may indicate the identifier of the second UE. A correspondence between the first UE and the second UE may be preconfigured in the first UE and the second UE, the first UE may determine that a type of UE always corresponds to the first UE (for example, the first UE is a smart wearable device, and the first UE may determine that a mobile phone always corresponds to the first UE). Alternatively, the correspondence may be configured by the network device, and the like. The network device may further determine, based on the first information of the first UE, a situation or a status of the N3GPP connection between the first UE and the at least one second UE indicated by the first information.

The first information may indicate the identifier of the at least one second UE in different indication manners. For example, in an indication manner, the first information may include the identifier of the at least one second UE.

Alternatively, in another indication manner, the first information may not include the identifier of the at least one second UE. For example, if the first UE has indicated, to the network device, identifiers of all second UEs corresponding to the first UE before sending the first information, the network device can determine the at least one second UE with the first information not including the identifier of the at least one second UE. For example, the network device determines that the N3GPP connection between the at least one second UE and the first UE is unavailable.

Alternatively, in still another indication manner, the first information may include a bitmap (bitmap), and a bit included in the bitmap is in one-to-one correspondence with the identifier of the at least one second UE, or in one-to-one correspondence with the at least one second UE. If a value of a bit is "1", it indicates that a second UE corresponding to the bit is the second UE indicated by the first information. If the value of the bit is "0", it indicates that the second UE corresponding to the bit is not the second UE indicated by the first information. For example, the first UE has indicated, to the network device, identifiers of all second UEs corresponding to the first UE before sending the first information. For example, a sequence of identifiers of second UEs corresponding to bits in the bitmap in the first information is the same as a sequence of identifiers of at least one N3GPP connection indicated by the first UE to the network device in advance. In this way, the network device can determine the at least one second UE based on the bitmap, to determine the status of the N3GPP connection between the first UE and the at least one second UE.

In an optional implementation, the first information is included in capability information of the first UE, or the first information is the capability information of the first UE. In FIG. 5, an example in which the first information is the capability information is used. In other words, the first UE may indicate the identifier of the at least one second UE to the network device by sending the capability information of the first UE to the network device. For example, the capability information is a radio resource control (radio resource control, RRC) message, where for example, the capability information is a UE capability information (UEcapabilityinformation) message, the capability information is included in a UE capability information message, the capability information is an RRC connection setup complete message, or the capability information is included in an RRC connection setup complete message. In this implementation, the at least one second UE indicated by the first information may include one or more of the following items: a second UE that has established an N3GPP connection to the first UE; a second UE that has not established an N3GPP connection to the first UE but corresponds to the first UE; or a second UE to which the first UE expects to establish an N3GPP connection.

Optionally, the capability information (or the first information) may further indicate one or more of the following items: The first UE supports a capability of performing multipath communication based on an N3GPP communication interface; the first UE has a capability of UE aggregation; or a status of an N3GPP connection of the first UE. That the first UE supports a capability of performing multipath communication based on an N3GPP communication interface may be understood as that the first UE supports a capability of performing multipath communication based on an N3GPP communication interface between the first UE and the at least one corresponding second UE. That the first UE has the capability of UE aggregation may be understood as that the first UE has a capability of performing UE aggregation with the at least one corresponding second UE through the N3GPP interface. The N3GPP connection of the first UE may include the N3GPP connection between the first UE and the at least one second UE, that is, the N3GPP connection of the first UE may include at least one N3GPP connection. In this case, the capability information (or the first information) may indicate whether a part or all of the at least one N3GPP connection supports UE aggregation, and/or indicate a status of the part or all of the at least one N3GPP connection. For example, the capability information may indicate whether each of the at least one N3GPP connection supports UE aggregation, and/or indicate a status of each of the at least one N3GPP connection. A status of an N3GPP connection may include a connected state (or connected) or a non-connected state (or non-connected). A status of an N3GPP connection is indicated, so that the network device can determine whether the first UE is connected to a second UE corresponding to the N3GPP connection, or determine whether the first UE can communicate with the second UE corresponding to the N3GPP connection through the N3GPP connection.

In an optional implementation of S501, S501 may include: The first UE sends the first information to the network device when a first condition is met. The first condition includes, for example, one or more of the following items: The first UE has a valid N3GPP connection; the first UE has no valid N3GPP connection; the first UE receives second information from the network device (where the second information is described below); a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. If the first condition includes the foregoing one item, when the item is met, it is considered that the first condition is met, or when the item is met, the first UE sends the first information. When the item is not met, it is considered that the first condition is not met, or when the item is not met, the first UE does not send the first information. Alternatively, if the first condition includes the foregoing two or more items, when the items are all met, it is considered that the first condition is met, or when the items are all met, the first UE sends the first information. When any one of the items is not met, it is considered that the first condition is not met, or when any one of the items is not met, the first UE does not send the first information.

The at least one second UE indicated by the first information may include one or more of the following items: a second UE that has established an N3GPP connection to the first UE; a second UE that has not established an N3GPP connection to the first UE but corresponds to the first UE; a second UE to which the first UE expects to establish an N3GPP connection; or a second UE whose N3GPP connection to the first UE has a status change. Optionally, if the first UE has not established an N3GPP connection to a part of or has established an N3GPP connection to none of the at least one second UE, after sending the first information to the network device or before sending the first information, the first UE may establish the N3GPP connection to the part or all of the at least one second UE.

The following describes content included in the first condition.

Provided that a valid N3GPP connection exists between the first UE and any second UE, it is considered that the first UE has a valid N3GPP connection. If no valid N3GPP connection exists between the first UE and any second UE, it is considered that the first UE has no valid N3GPP connection. If the first UE has established an N3GPP connection to a second UE, the N3GPP connection is not disconnected or does not fail, and normal communication can be performed, it is considered that the N3GPP connection between the first UE and the second UE is valid. Alternatively, if no N3GPP connection is established between the first UE and a second UE, or the N3GPP connection has been disconnected or has failed, it is considered that the N3GPP connection between the first UE and the second UE is invalid.

The data volume to be transmitted by the first UE may include a part or all of the data volume to be transmitted by the first UE. The data volume is, for example, a data volume (data volume) to be transmitted at a PDCP layer, or a data volume corresponding to a buffer status report (buffer status report, BSR). The data volume is irrelevant to a connection or a communication interface of the first UE, for example, is irrelevant to an N3GPP communication interface, a Uu interface, or another type of interface of the first UE. The data volume is a data volume which the first UE expects (or needs) to transmit. Data corresponding to the data volume may be transmitted through the N3GPP communication interface and/or the Uu interface, or may be transmitted through another interface. When the data volume to be transmitted by the first UE is greater than or equal to the first threshold, it indicates that the data volume to be transmitted by the first UE is large. In this case, if transmission is performed through only the Uu interface, a transmission capability may be limited, resulting in a large transmission delay. In view of this, in this case, the first UE may send the first information, so that the first UE can perform UE aggregation, to improve a throughput of the first UE and reduce the transmission delay. Optionally, if the first condition includes that the data volume to be transmitted by the first UE is greater than or equal to the first threshold, the first information may further include the first threshold, so that the network device can determine, based on this, whether to change a UE aggregation manner of the first UE.

The data transmission rate expected by the first UE may alternatively be irrelevant to a communication interface of the first UE, for example, is irrelevant to an N3GPP communication interface, a Uu interface, or another type of interface of the first UE. The data transmission rate is a data transmission rate expected (or needed) by the first UE. The data transmission rate may be a total transmission rate of all interfaces of the first UE, may be a transmission rate that is expected by the first UE and that should be reached by each communication interface of the first UE, or may be an average transmission rate that is expected by the first UE and that is of all the communication interfaces. When the data transmission rate expected by the first UE is greater than or equal to the second threshold, it indicates that the first UE has a high requirement on the data transmission rate. In this case, if transmission is performed through only the Uu interface, the data transmission rate may not meet the requirement of the first UE. In view of this, in this case, the first UE may send the first information, so that the first UE can perform UE aggregation, to improve the data transmission rate of the first UE. Optionally, if the first condition includes that the data transmission rate expected by the first UE is greater than or equal to the first threshold, the first information may further include the second threshold, so that the network device can determine, based on this, whether to change a UE aggregation manner of the first UE. That the status of the N3GPP connection of the first UE changes includes, for example, one or more of the following items: A data transmission rate of the at least one N3GPP connection increases or decreases; the at least one N3GPP connection is disconnected; the at least one N3GPP connection fails; the first UE has added the at least one N3GPP connection; the first UE expects (or requests or needs) to add the at least one N3GPP connection; the first UE expects to change a UE participating in UE aggregation to the at least one second UE; or the first UE expects (or requests or needs) to disconnect the at least one N3GPP connection. Optionally, if the first condition includes that the status of the N3GPP connection of the first UE changes, and that the status of the N3GPP connection of the first UE changes includes that the data transmission rate of the at least one N3GPP connection increases or decreases, the first information may further include a current (namely, changed) data transmission rate of the at least one N3GPP connection, so that the network device can determine, based on this, whether to change a UE aggregation manner of the first UE.

The first UE has added the at least one N3GPP connection, indicating that the first UE has established the N3GPP connection to the at least one second UE. For example, the N3GPP connection between the first UE and the at least one second UE has been successfully established and can normally work, and the first UE expects the at least one second UE to also participate in UE aggregation, and expects a network to perform related configuration accordingly. The first UE expects to add the at least one N3GPP connection, indicating that the first UE has not established the N3GPP connection to the at least one second UE but the first UE expects to establish the N3GPP connection to the at least one second UE. For example, the N3GPP connection between the first UE and the at least one second UE has not been successfully established, but the first UE expects to add the at least one second UE used for UE aggregation or expects to add the at least one second UE that is to participate in UE aggregation, and expects a network to perform related configuration accordingly.

The first UE expects to change the UE participating in UE aggregation to the at least one second UE, where the first UE may have established the N3GPP connection to the at least one second UE, or may not have established the N3GPP connection to the at least one second UE. The first UE may replace an existing N3GPP connection with a new N3GPP connection. For example, the at least one N3GPP connection includes an N3GPP connection 1 and an N3GPP connection 2, the original N3GPP connection of the first UE includes an N3GPP connection 3, and the first UE expects to replace the N3GPP connection 3 with the new N3GPP connection 1 and the new N3GPP connection 2. **In** this case, the status of the N3GPP connection of the first UE changes, which may specifically include: The first UE expects to disconnect the N3GPP connection 3, and expects to add the N3GPP connection 1 and the N3GPP connection 2. For example, in this case, the first information may indicate an identifier of a second UE 1 (corresponding to the N3GPP connection 1) and an identifier of a second UE 2 (corresponding to the N3GPP connection 2); or the first information may indicate the identifier of the second UE 1 (corresponding to the N3GPP connection 1), the identifier of the second UE 2 (corresponding to the N3GPP connection 2), and an identifier of a second UE 3 (corresponding to the N3GPP connection 3). Because the network device has known that the first UE performs UE aggregation with the second UE 3, after receiving the first information, the network device may clearly replace the second UE 3 with the second UE 1 and the second UE 2 (or replace the N3GPP connection 1 with the N3GPP connection 1 and the N3GPP connection 2).

The first UE expects to disconnect the at least one N3GPP connection. For example, when an N3GPP connection is faulty, the first UE may expect to disconnect the N3GPP connection; or although an N3GPP connection is not faulty but normally works, the first UE may expect to disconnect the N3GPP connection for energy saving or another reason. That the data transmission rate of the valid N3GPP connection of the first UE is greater than or equal to the third threshold may be understood as that a data transmission rate of each of all current valid N3GPP connections of the first UE is greater than or equal to the third threshold, an average data transmission rate of all the current valid N3GPP connections of the first UE is greater than or equal to the third threshold, or a total data transmission rate of all the current valid N3GPP connections of the first UE is greater than or equal to the third threshold. Optionally, if the first condition includes that the data transmission rate of the valid N3GPP connection of the first UE is greater than or equal to the third threshold, the first information may further include the third threshold, so that the network device can determine, based on this, whether to change a UE aggregation manner of the first UE.

The data transmission rate of the valid N3GPP connection of the first UE is less than the fourth threshold. For example, a data transmission rate of each of all current valid N3GPP connections of the first UE is less than the fourth threshold, an average data transmission rate of all the current valid N3GPP connections of the first UE is less than the fourth threshold, or a total data transmission rate of all the current valid N3GPP connections of the first UE is less than the fourth threshold. Optionally, if the first condition includes that the data transmission rate of the valid N3GPP connection of the first UE is less than the fourth threshold, the first information may further include the fourth threshold, so that the network device can determine, based on this, whether to change a UE aggregation manner of the first UE.

The data transmission rate of the first UE is greater than or equal to the fifth threshold. The data transmission rate is, for example, a total downlink transmission rate of the Uu interface of the first UE, a current total transmission rate of all the communication interfaces of the first UE, or a current average transmission rate of all the communication interfaces of the first UE. Optionally, if the first condition includes that the data transmission rate of the first UE is greater than the fifth threshold, the first information may further include the fifth threshold, so that the network device can determine, based on this, whether to change a UE aggregation manner of the first UE.

One or more of the third threshold, the fourth threshold, or the fifth threshold may be determined by the first UE, may be preconfigured in the first UE, may be configured by the network device, or may be predefined in a protocol. In addition, different thresholds in the thresholds may be configured in a same manner, for example, predefined in the protocol; or may be configured in different manners, for example, the third threshold and the fourth threshold are preconfigured in the first UE, and the fifth threshold is configured by the network device. The third threshold is equal to or not equal to the fourth threshold. For example, the fourth threshold is less than or equal to the third threshold, or may be greater than the third threshold. In addition, the third threshold is equal to or not equal to the second threshold described above.

Optionally, before S501, the method further includes S502: The network device may send the second information to the first UE. Correspondingly, the first UE may receive the second information from the network device. When the first information is included in the capability information of the first UE, or the first information is the capability information of the first UE, the second information may be for requesting the capability information of the first UE. In this case, after receiving the second information, the first UE may perform S501. For example, when the first information is included in the capability information of the first UE, or the first information is the capability information of the first UE, the second information may be a UE capability enquiry (UEcapabilityenquiry) message, the second information is included in the UE capability enquiry message, or the second information may be other information. For example, if the first condition includes that the second information from the network device is received, when the first UE receives the second information, the first condition is met. In this case, reporting of the first information in S501 may be triggered.

In an optional implementation, the first UE may further send other information to the network device. For example, the method further includes S503: The first UE may send a measurement report (measurement report, MR) to the network device. Correspondingly, the network device receives the measurement report from the first UE. In addition/alternatively, the first UE may send UE assistance information (UE assistance information) to the network device. Correspondingly, the network device receives the UE assistance information from the first UE. The network device may determine the status of the N3GPP connection of the first UE or the change of the status of the N3GPP connection of the first UE based on the measurement report, the UE assistance information, or the like reported by the first UE.

For example, if the network device sends measurement configuration information to the first UE, the first UE may measure a reference signal based on the measurement configuration information, and send the measurement report to the network device when a second condition is met. The measurement configuration information is, for example, for configuring to allow the first UE to send the measurement report, and/or for configuring a condition for sending the measurement report by the first UE, which is referred to as, for example, the second condition. The second condition includes, for example, one or more of the following items: The first UE has a valid N3GPP connection; the first UE has no valid N3GPP connection; the first UE receives fifth information from the network device; a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. For content included in the second condition, refer to the foregoing descriptions of the first condition.

For example, the first information is capability information of the first UE, or the first information is included in the capability information. In the measurement report sent by the first UE to the network device, a status of an N3GPP connection of the at least one second UE corresponding to the first information may be indicated based on the first information. For example, the first information indicates the identifier of the at least one second UE, and the N3GPP connection of the at least one second UE is a measurement object of the first UE. In this case, in the measurement report, the identifier of the at least one second UE may be associated with at least one measurement identifier (ID), and for each measurement ID, the status of the N3GPP connection between the at least one second UE and the first UE may be reported.

For another example, the UE assistance information is an RRC message. Optionally, when a third condition is met, the first UE may send the UE assistance information to the network device. The third condition includes, for example, one or more of the following items: The first UE has a valid N3GPP connection; the first UE has no valid N3GPP connection; the first UE receives fifth information from the network device; a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. For content included in the third condition, refer to the foregoing descriptions of the first condition. The third condition may be the same as or different from the second condition.

For example, the first information is capability information of the first UE, or the first information is included in the capability information. In the UE assistance information sent by the first UE to the network device, a status of an N3GPP connection of the at least one second UE corresponding to the first information may be indicated based on the first information. For example, the first information indicates the identifier of the at least one second UE, and the UE assistance information may indicate, in a form of the bitmap, the status of the N3GPP connection corresponding to the at least one second UE. For another example, the first information indicates the identifier of the at least one second UE, and the UE assistance information may not include a specific second UE in the at least one second UE indicated by the first information, to indicate that the second UE has no N3GPP connection to the first UE, or indicate that the second UE has no valid N3GPP connection to the first UE.

The fifth information described above may be configured as one or more of the following items: allowing the first UE to send information about the corresponding second UE; allowing the first UE to perform UE aggregation; allowing the first UE to send information about the corresponding second UE when the first UE expects to perform UE aggregation; allowing the first UE to report information about the corresponding second UE and the status of the N3GPP connection; allowing the first UE to send the UE assistance information; a condition for sending the assistance information or performing measurement reporting by the first UE (for example, the second condition or the third condition); or a measurement configuration (including a measurement object, a measurement type, or the like) of the first UE for the status of the N3GPP connection. For example, the network device may send the fifth information to the first UE, and after the first UE receives the fifth information, if the third condition is met, the first UE may send the UE assistance information to the network device. If the fifth information is for configuring to allow the first UE to send the UE assistance information rather than configuring the condition for sending the first information by the first UE, the third condition may be preconfigured in the first UE, predefined in a protocol, or the like.

For example, the fifth information is an RRC message, or the fifth information is included in the RRC message. For example, the fifth information is included in the RRC message. In this case, in an implementation, the RRC message is an RRC reconfiguration (RRC reconfiguration) message, and the fifth information may be included in an other configuration (OtherConfig) information element of the RRC reconfiguration message, may be included in a measurement configuration information element of the RRC reconfiguration message, or may be included in another information element of the RRC reconfiguration message. This is not specifically limited. Optionally, the RRC reconfiguration message (or the fifth information) may further include one or more of the following items: information about a timer, the first threshold, or the second threshold. It can be learned from the foregoing descriptions that, the first threshold and/or the second threshold may be for determining, by the first UE, whether one or more of the first condition, the second condition, or the third condition are met. The information about the timer may be for determining, by the first UE, an occasion at which the UE assistance information can be sent to the network device. For example, the first UE may send the UE assistance information after receiving the fifth information, and the timer may be started when the sending of the UE assistance information is completed. Before the timer expires, the first UE does not repeatedly send the UE assistance information to the network device, to reduce a transmission process of redundant information. Alternatively, one or more of the first threshold, the second threshold, or the timer may be preconfigured in the first UE, predefined in the protocol, or the like. In this case, the RRC reconfiguration message does not need to include one or more of the first threshold, the second threshold, or the timer.

It can be learned from the foregoing implementations that, the first UE may report the first information based on the capability information, and the network device may obtain the first information based on the capability information of the first UE, and determine, based on this, the status of the N3GPP connection of the first UE. Optionally, in addition to sending the capability information to the network device, the first UE may further send the measurement report and/or the UE assistance information to the network device. In this case, the network device may determine the status of the N3GPP connection of the first UE or the change of the N3GPP connection of the first UE based on the measurement report and/or the UE assistance information. It can be learned that, the network device may obtain the status of the N3GPP connection of the first UE through a combination of a plurality of types of messages. Optionally, the method may further include S504: The network device sends third information to the first UE. Correspondingly, the first UE receives the third information from the network device. For example, S504 may be performed after S501. In addition, S504 may be performed after S503, may be performed before S503, or may be simultaneously performed with S503. The third information may indicate the first UE to perform UE aggregation with one or more second UEs.

The third information may indicate that the first UE is allowed to perform UE aggregation, or the third information may indicate that the first UE is allowed to perform UE aggregation with the one or more second UEs. If the third information indicates that the first UE is allowed to perform UE aggregation with the one or more second UEs, optionally, the third information may indicate an identifier of the one or more second UEs. For example, the third information may indicate, by indicating the identifier of the one or more second UEs, that the first UE is allowed to perform UE aggregation with the one or more second UEs; or the third information may include information indicating that the first UE is allowed to perform UE aggregation with the one or more second UEs, and include information indicating the identifier of the one or more second UEs. The one or more second UEs may include the second UE corresponding to the identifier of the at least one second UE indicated by the first information, and/or include a second UE not indicated by the first information. The one or more second UEs include, for example, a part or all of the at least one second UE, and/or include another UE other than the at least one second UE.

For example, after receiving the first information, the network device may determine whether to configure UE aggregation for the first UE, or determine to configure, for the first UE, UE aggregation with which second UE or second UEs. The network device may indicate a determining result to the first UE based on the third information. Optionally, the third information is included in an RRC reconfiguration message, or the third information is the RRC reconfiguration message. The RRC reconfiguration message (or the third information) may further include first configuration information, for configuring UE aggregation between the first UE and the one or more second UEs. Optionally, the method may further include S505: The network device sends fourth information to the one or more second UEs. Correspondingly, each of the one or more second UEs receives the fourth information from the network device. For example, S505 may be performed after S501, where S505 and S504 may be simultaneously performed, S505 is performed before S504, or S505 is performed after S504. In FIG. 5, one second UE is used as an example. The fourth information may indicate to perform UE aggregation with the first UE. Optionally, the fourth information is included in an RRC reconfiguration message, or the fourth information is the RRC reconfiguration message. The RRC reconfiguration message (or the fourth information) may further include second configuration information, for configuring UE aggregation with the first UE. The second configuration information included in the fourth information sent by the network device to different second UEs may be the same or different.

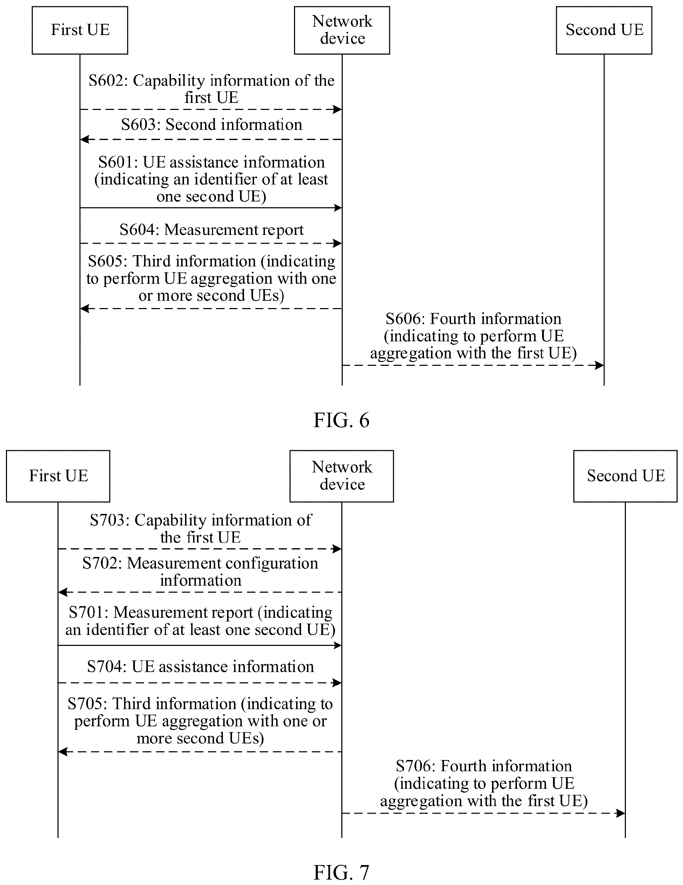

In this embodiment of this application, through reporting by the first UE, the network device can obtain the identifier of the second UE that communicates with the first UE through the N3GPP connection, so that the network device can configure the first UE to implement UE aggregation with the second UE, to improve the throughput of the first UE. As described in the embodiment shown in FIG. 5, the first information may be included in the capability information of the first UE, or the first information is the capability information. In addition, the first information may alternatively be implemented in another manner. In view of this, an embodiment of this application provides another communication method, and another implementation of the first information is described by using the method. FIG. 6 is a flowchart of the method.

S601: A first UE sends first information to a network device. Correspondingly, the network device receives the first information from the first UE.

The first information may indicate an identifier of at least one second UE corresponding to the first UE. The first UE communicates with each of the at least one second UE through an N3GPP connection. When S601 is performed, the first UE may have established the N3GPP connection to each of the at least one second UE; the first UE has established the N3GPP connection to none of the at least one second UE; or the first UE has established an N3GPP connection to a part of the at least one second UE, but has not established an N3GPP connection to the other part of the at least one second UE. For the part of content, refer to S501 in the embodiment shown in FIG. 5.

The first information may indicate the identifier of the at least one second UE in different indication manners. For example, in an indication manner, the first information may include the identifier of the at least one second UE.

Alternatively, in another indication manner, the first information may not include the identifier of the at least one second UE. For example, if the first UE has indicated, to the network device, identifiers of all second UEs corresponding to the first UE before sending the first information (for example, the first UE has sent capability information of the first UE to the network device before sending the first information, where the capability information indicates the identifiers of all the second UEs corresponding to the first UE), the network device can determine the at least one second UE based on that the first information does not include the identifier of the at least one second UE. For example, the network device determines that the N3GPP connection between the at least one second UE and the first UE is unavailable.

Alternatively, in still another indication manner, the first information may include a bitmap, and a bit included in the bitmap is in one-to-one correspondence with the identifier of the at least one second UE, or in one-to-one correspondence with the at least one second UE. If a value of a bit is "1", it indicates that a second UE corresponding to the bit is the second UE indicated by the first information. If the value of the bit is "0", it indicates that the second UE corresponding to the bit is not the second UE indicated by the first information. For example, the first UE has indicated, to the network device, identifiers of all second UEs corresponding to the first UE before sending the first information. For example, a sequence of identifiers of second UEs corresponding to bits in the bitmap in the first information is the same as a sequence of identifiers of at least one N3GPP connection indicated by the first UE to the network device in advance. In this way, the network device can determine the at least one second UE based on the bitmap, to determine a status of the N3GPP connection between the first UE and the at least one second UE.

Optionally, as described above, before sending the first information, the first UE may further send the capability information of the first UE to the network device. Correspondingly, the network device may receive the capability information from the first UE, as shown in S602 in FIG. 6. The capability information indicates, for example, one or more of the following items: an identifier of a part or all of the second UEs corresponding to the first UE; the first UE supports a capability of performing multipath communication based on an N3GPP communication interface; the first UE has a capability of UE aggregation; or a status of an N3GPP connection of the first UE. The N3GPP connection of the first UE may include the N3GPP connection between the first UE and the at least one second UE, that is, the N3GPP connection of the first UE may include at least one N3GPP connection. In this case, the capability information may indicate whether a part or all of the at least one N3GPP connection supports UE aggregation, and/or indicate a status of the part or all of the at least one N3GPP connection. For another example, the capability information indicates that the first UE has a capability of performing UE aggregation through the N3GPP connection, or indicates that the first UE has a capability of configuring multipath transmission through an N3GPP interface, but does not indicate information about a UE that has an N3GPP connection to the first UE or a UE corresponding to the N3GPP interface of the first UE. For more descriptions of the capability information, refer to S501 in the embodiment shown in FIG. 5.

Optionally, before S602, the network device may send a UE capability enquiry message to the first UE. Correspondingly, the first UE may receive the UE capability enquiry message from the network device. After receiving the UE capability enquiry message, the first UE may send the capability information to the network device.

In an optional implementation, the first information is included in UE assistance information, or the first information is the UE assistance information. In FIG. 6, an example in which the first information is the UE assistance information is used. The UE assistance information is, for example, an RRC message. In other words, the first UE may indicate the identifier of the at least one second UE to the network device by sending the UE assistance information to the network device.

Optionally, S601 may include: The first UE sends the first information to the network device when a first condition is met. The first condition includes, for example, one or more of the following items: The first UE has a valid N3GPP connection; the first UE has no valid N3GPP connection; the first UE receives second information from the network device; a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. If the first condition includes the foregoing one item, when the item is met, it is considered that the first condition is met, or when the item is met, the first UE sends the first information. When the item is not met, it is considered that the first condition is not met, or when the item is not met, the first UE does not send the first information. Alternatively, if the first condition includes the foregoing two or more items, when the items are all met, it is considered that the first condition is met, or when the items are all met, the first UE sends the first information. When any one of the items is not met, it is considered that the first condition is not met, or when any one of the items is not met, the first UE does not send the first information.

The at least one second UE indicated by the first information may include one or more of the following items: a second UE that has established an N3GPP connection to the first UE; a second UE that has not established an N3GPP connection to the first UE but corresponds to the first UE; a second UE to which the first UE expects to establish an N3GPP connection; or a second UE whose N3GPP connection to the first UE has a status change. Optionally, if the first UE has not established an N3GPP connection to a part of or has established an N3GPP connection to none of the at least one second UE, after sending the first information to the network device or before sending the first information, the first UE may establish the N3GPP connection to the part or all of the at least one second UE.

For more content of the first condition, refer to S501 in the embodiment shown in FIG. 5.

Optionally, before S601, the method further includes S603: The network device may send the second information to the first UE. Correspondingly, the first UE may receive the second information from the network device. S603 may be performed before S602, may be simultaneously performed with S602, or may be performed after S602. The second information is, for example, configuration information. For example, the second information described above may be configured as one or more of the following items: allowing the first UE to send information about the corresponding second UE; allowing the first UE to perform UE aggregation; allowing the first UE to send information about the corresponding second UE when the first UE expects to perform UE aggregation; allowing the first UE to report information about the corresponding second UE and the status of the N3GPP connection; allowing the first UE to send the first information; or a condition for sending the first information by the first UE (for example, the first condition). For example, the second information is an RRC message, or the second information is included in the RRC message. For example, the second information is included in the RRC message. In this case, in an implementation, the RRC message is an RRC reconfiguration message, and the second information may be included in an OtherConfig information element of the RRC reconfiguration message, or may be included in another information element of the RRC reconfiguration message. This is not specifically limited. Optionally, the RRC reconfiguration message (or the second information) may further include one or more of the following items: information about a timer, the first threshold, or the second threshold. It can be learned from the foregoing descriptions that, the first threshold and/or the second threshold may be for determining, by the first UE, whether the first condition is met. The information about the timer may be for determining, by the first UE, an occasion at which the first information can be sent to the network device. For example, the first UE may send the first information after receiving the second information, and the timer may be started when the sending of the first information is completed. Before the timer expires, the first UE does not repeatedly send the first information to the network device, to reduce a transmission process of redundant information. Alternatively, one or more of the first threshold, the second threshold, or the timer may be preconfigured in the first UE, predefined in a protocol, or the like. In this case, the RRC reconfiguration message does not need to include one or more of the first threshold, the second threshold, or the timer.

In an optional implementation, the first UE may further send other information to the network device. For example, the method further includes S604: The first UE may send a measurement report to the network device. Correspondingly, the network device receives the measurement report from the first UE. For example, if the network device sends measurement configuration information to the first UE, the first UE may measure a reference signal based on the measurement configuration information, and send the measurement report to the network device when a second condition is met. The measurement configuration information is, for example, for configuring to allow the first UE to send the measurement report, and/or for configuring a condition for sending the measurement report by the first UE, which is referred to as, for example, the second condition. The second condition includes, for example, one or more of the following items: The first UE has a valid N3GPP connection; the first UE has no valid N3GPP connection; the first UE receives fifth information from the network device; a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. For content included in the second condition, refer to the foregoing descriptions of the first condition.

Optionally, the method may further include S605: The network device sends third information to the first UE. Correspondingly, the first UE receives the third information from the network device. For example, S605 may be performed after S601. In addition, S605 may be performed after S604, may be performed before S604, or may be simultaneously performed with S604. The third information may indicate the first UE to perform UE aggregation with one or more second UEs. For content indicated by the third information and the like, refer to S504 in the embodiment shown in FIG. 5.

For example, after receiving the capability information of the first UE and/or the first information, the network device may determine whether to configure UE aggregation for the first UE, or determine to configure, for the first UE, UE aggregation with which second UE or second UEs. The network device may indicate a determining result to the first UE based on the third information. Optionally, the third information is included in an RRC reconfiguration message, or the third information is the RRC reconfiguration message. The RRC reconfiguration message (or the third information) may further include first configuration information, for configuring UE aggregation between the first UE and the one or more second UEs.

Optionally, the method may further include S606: The network device sends fourth information to the one or more second UEs. Correspondingly, each of the one or more second UEs receives the fourth information from the network device. For example, S606 may be performed after S601, where S606 and S605 may be simultaneously performed, S606 is performed before S605, or S606 is performed after S605. In FIG. 6, one second UE is used as an example. The fourth information may indicate to perform UE aggregation with the first UE. Optionally, the fourth information is included in an RRC reconfiguration message, or the fourth information is the RRC reconfiguration message. The RRC reconfiguration message (or the fourth information) may further include second configuration information, for configuring UE aggregation with the first UE. The second configuration information included in the fourth information sent by the network device to different second UEs may be the same or different.

In this embodiment of this application, through reporting by the first UE, the network device can obtain the identifier of the second UE that communicates with the first UE through the N3GPP connection, so that the network device can determine the status of the N3GPP connection of the first UE, and configure the first UE to implement UE aggregation with the second UE, to improve a throughput of the first UE. In addition, in this embodiment of this application, the first UE may report the identifier of the second UE to the network device based on the UE assistance information, to report the identifier of the second UE more flexibly.

As described in the embodiment shown in FIG. 5, the first information may be included in the capability information of the first UE, or the first information is the capability information. As described in the embodiment shown in FIG. 6, the first information may be included in the UE assistance information, or the first information is the UE assistance information. In addition, the first information may alternatively be implemented in another manner. In view of this, an embodiment of this application provides still another communication method, and another implementation of the first information is described by using the method. FIG. 7 is a flowchart of the method.

S701: A first UE sends first information to a network device. Correspondingly, the network device receives the first information from the first UE.

The first information may indicate an identifier of at least one second UE corresponding to the first UE. The first UE communicates with each of the at least one second UE through an N3GPP connection. When S701 is performed, the first UE may have established the N3GPP connection to each of the at least one second UE; the first UE has established the N3GPP connection to none of the at least one second UE; or the first UE has established an N3GPP connection to a part of the at least one second UE, but has not established an N3GPP connection to the other part of the at least one second UE. Even if the first UE may not have established an N3GPP connection to a part of or may have established an N3GPP connection to none of the at least one second UE, the first UE has a capability of establishing the N3GPP connection to the second UE. For the part of content, refer to S501 in the embodiment shown in FIG. 5. In addition, for a manner of indicating the identifier of the at least one second UE by the first information, refer to S501 in the embodiment shown in FIG. 5.

In this embodiment of this application, in an optional implementation of the first information, the first information is included in a measurement report of the first UE, or the first information is the measurement report of the first UE. In FIG. 7, an example in which the first information is the measurement report is used. It may be understood that the first information has a plurality of different implementations. For example, in an implementation, the first information is included in capability information of the first UE, or the first information is the capability information; in another implementation, the first information is included in UE assistance information, or the first information is the UE assistance information; and in still another implementation, the first information is included in the measurement report of the first UE, or the first information is the measurement report of the first UE. The first two implementations of the first information are described by using the embodiment shown in FIG. 5 and the embodiment shown in FIG. 6, and then still another implementation of the first information is described by using an embodiment of this application.

If the first information is the measurement report or is included in the measurement report, in addition to indicating the identifier of the at least one second UE, the measurement report may further include a measurement result of the first UE for the at least one second UE, for example, include a status of an N3GPP interface measured by the first UE for information from the at least one second UE, for example, whether the N3GPP connection is available and/or a transmission rate that can be supported by the N3GPP connection.

Optionally, before S701, the method further includes S702: The network device sends second information to the first UE. Correspondingly, the first UE receives the second information from the network device. For example, the second information is included in an RRC reconfiguration message, or the second information is the RRC reconfiguration message. The second information may be for configuring to allow the first UE to send the first information, and/or for configuring a condition for sending the first information by the first UE, which is referred to as, for example, a first condition. Optionally, the second information is, for example, measurement configuration information (which is used as an example in FIG. 7), and the first condition may be a condition for performing measurement reporting by the first UE. The measurement configuration information may also be understood as including a measurement reporting configuration, and the measurement reporting configuration is the first condition. In this case, S701 may include: The first UE sends the first information to the network device when the first condition is met. If the first condition is not met, the first UE does not send the first information to the network device. For the first condition, refer to the descriptions of the embodiment shown in FIG. 5.

In an optional implementation, the first UE may further send the capability information of the first UE to the network device. Correspondingly, the network device receives the capability information from the first UE. For the step, refer to S703. For example, S703 is performed before S701.

For example, the capability information may indicate one or more of the following items: an identifier of a part or all of the second UEs corresponding to the first UE; the first UE supports a capability of performing multipath communication based on an N3GPP communication interface; the first UE has a capability of UE aggregation; or a status of an N3GPP connection of the first UE. The N3GPP connection of the first UE may include the N3GPP connection between the first UE and the at least one second UE, that is, the N3GPP connection of the first UE may include at least one N3GPP connection. In this case, the capability information may indicate whether a part or all of the at least one N3GPP connection supports UE aggregation, and/or indicate a status of the part or all of the at least one N3GPP connection. For another example, the capability information indicates that the first UE has a capability of performing UE aggregation through the N3GPP connection, or indicates that the first UE has a capability of configuring multipath transmission through an N3GPP interface, but does not indicate information about a UE that has an N3GPP connection to the first UE or a UE corresponding to the N3GPP interface of the first UE. For more descriptions of the capability information, refer to S501 in the embodiment shown in FIG. 5.

Optionally, before S703, the network device may send a UE capability enquiry message to the first UE. Correspondingly, the first UE may receive the UE capability enquiry message from the network device. After receiving the UE capability enquiry message, the first UE may send the capability information to the network device.

The measurement configuration information may be for configuring the first condition in a plurality of configuration manners.

In an optional configuration manner of the measurement configuration information, the measurement configuration information includes a first event, and when the first UE meets the first event, the first UE may be triggered to send a measurement report to the network device. For example, the first event is that the first UE has a valid N3GPP connection. For example, an entering condition of the first event includes that the first UE has a valid N3GPP connection, or includes that a data transmission rate of an N3GPP connection of the first UE is greater than or equal to a third threshold; and a leaving condition of the first event includes that the first UE has no valid N3GPP connection or has no N3GPP connection, or includes that a data transmission rate of a valid N3GPP connection of the first UE is less than a fourth threshold. When the first UE meets the entering condition of the first event, the first UE may be triggered to send the first information to the network device. When the first UE meets the leaving condition of the first event, whether the first UE needs to be triggered to send the first information to the network device may be configured by the network device, for example, configured by the network device based on the measurement configuration information. Through reporting by the first UE, the network device can determine a change of the status of the N3GPP connection. Optionally, if the first UE is also triggered to send the first information to the network device when the first UE meets the leaving condition of the first event, it may be understood that the first condition includes one or more of the following items: The first UE has the valid N3GPP connection; the data transmission rate of the valid N3GPP connection of the first UE is greater than or equal to the third threshold; the first UE has no valid N3GPP connection; or the data transmission rate of the valid N3GPP connection of the first UE is less than the fourth threshold. Alternatively, if the first UE is not triggered to send the first information to the network device when the first UE meets the leaving condition of the first event, it may be understood that the first condition includes: The first UE has the valid N3GPP connection, and/or the data transmission rate of the valid N3GPP connection of the first UE is greater than or equal to the third threshold.

In an optional implementation, the first UE may further send other information to the network device. For example, the method further includes S704: The first UE may send UE assistance information to the network device. Correspondingly, the network device receives the UE assistance information from the first UE.

For example, the UE assistance information is an RRC message. Optionally, when a third condition is met, the first UE may send the UE assistance information to the network device. The third condition includes, for example, one or more of the following items: The first UE has a valid N3GPP connection; the first UE has no valid N3GPP connection; the first UE receives fifth information from the network device; a data volume to be transmitted by the first UE is greater than or equal to a first threshold; a data transmission rate expected (or requested or needed) by the first UE is greater than or equal to a second threshold; the status of the N3GPP connection of the first UE (for example, the N3GPP connection between the first UE and the at least one second UE) changes; a data transmission rate of a valid N3GPP connection of the first UE is greater than or equal to a third threshold; a data transmission rate of a valid N3GPP connection of the first UE is less than a fourth threshold; or a data transmission rate of the first UE is greater than or equal to a fifth threshold. For content included in the third condition, refer to the descriptions of the first condition in the embodiment shown in FIG. 5.

The fifth information may be configured as one or more of the following items: allowing the first UE to send information about the corresponding second UE; allowing the first UE to perform UE aggregation; allowing the first UE to send information about the corresponding second UE when the first UE expects to perform UE aggregation; allowing the first UE to report information about the corresponding second UE and the status of the N3GPP connection; allowing the first UE to send the UE assistance information; or a condition for sending the first information by the first UE (for example, the third condition). For content such as the part of content and an implementation of the fifth information, refer to the descriptions of the embodiment shown in FIG. 5.

Optionally, if the first UE further sends the capability information and/or the UE assistance information of the first UE to the network device before S701 or S702, for example, the first UE has indicated, to the network device, an identifier of a part or all of the second UEs corresponding to the first UE based on the information, the measurement configuration information may be for configuring one or more first events, where different first events may correspond to different second UEs. This is equivalent to that the first UE may separately use corresponding measurement reporting manners for different second UEs, so that reporting by the first UE is more targeted.

Alternatively, the measurement configuration information may include a plurality of events. For example, different items in the first condition may be considered as different events, and the measurement configuration information may include one or more of the events. For example, the measurement configuration information includes a first event and a second event. The first event is an event that the first UE has a valid N3GPP connection status, and the second event is an event that the first UE has no valid N3GPP connection status. In this case, the network device configures two events, so that the first UE may report the status of the N3GPP interface based on the current status. Optionally, the measurement configuration information may also be for separately configuring corresponding events for different second UEs, and the events configured for the different second UEs may be the same or different.

In another optional configuration manner of the measurement configuration information, content configured by using the measurement configuration information may not be understood as an event. For example, the measurement configuration information may include a third threshold. When a data transmission rate of a valid N3GPP connection of the first UE is greater than or equal to the third threshold, the first UE is triggered to send the first information to the network device. For another example, the measurement configuration information may include a fifth threshold. When a data transmission rate of the first UE is greater than or equal to the fifth threshold, the first UE is triggered to send the first information to the network device.

In still another optional configuration manner of the measurement configuration information, the measurement configuration information may include information about a reporting type, for example, include an identifier or an index of the reporting type. One reporting type may be associated with one or more events (for example, different items in the first condition may be considered as different events; or one event includes an entering condition and a leaving condition. Refer to the descriptions of the first event), or may be associated with the first condition. An association relationship between the reporting type and the event or the condition may be preconfigured in the first UE and the network device, may be configured by the network device for the first UE, may be predefined in a protocol, or the like. For example, an event associated with the reporting type corresponding to the information about the reporting type included in the measurement configuration information includes: The first UE receives the measurement configuration information, and/or the status of the N3GPP connection of the first UE changes. In this case, when receiving the measurement configuration information, the first UE may be triggered to send the first information to the network device; or when the status of the N3GPP connection of the first UE changes, the first UE may be triggered to send the first information to the network device. In the configuration manner, the measurement configuration information needs to include only the information about the reporting type, and does not need to include specific content of an event or a condition. In this way, the information about the reporting type has a relatively small information amount, to reduce overheads of the measurement configuration information.

In addition to the configuration manners described above, the measurement configuration information may also use another configuration manner. This is not limited herein.

Optionally, the method may further include S705: The network device sends third information to the first UE. Correspondingly, the first UE receives the third information from the network device. For example, S705 may be performed after S701. In addition, S705 may be performed after S704, may be performed before S704, or may be simultaneously performed with S704. The third information may indicate the first UE to perform UE aggregation with one or more second UEs. For more descriptions of S703, refer to S502 in the embodiment shown in FIG. 5. Optionally, the method may further include S706: The network device sends fourth information to the one or more second UEs. Correspondingly, each of the one or more second UEs receives the fourth information from the network device. For example, S706 may be performed after S701, where S706 and S705 may be simultaneously performed, S706 is performed before S705, or S706 is performed after S705. In FIG. 7, one second UE is used as an example.

The fourth information may indicate to perform UE aggregation with the first UE. For more descriptions of the fourth information, refer to S503 in the embodiment shown in FIG. 5.

In this embodiment of this application, through reporting by the first UE, the network device can obtain the identifier of the second UE that communicates with the first UE through the N3GPP connection, so that the network device can configure the first UE to implement UE aggregation with the second UE, to improve a throughput of the first UE. In addition, the first UE may indicate the identifier of the second UE to the network device based on the measurement report, and does not need to indicate the identifier of the second UE to the network device based on additional information, to help reduce signaling overheads.

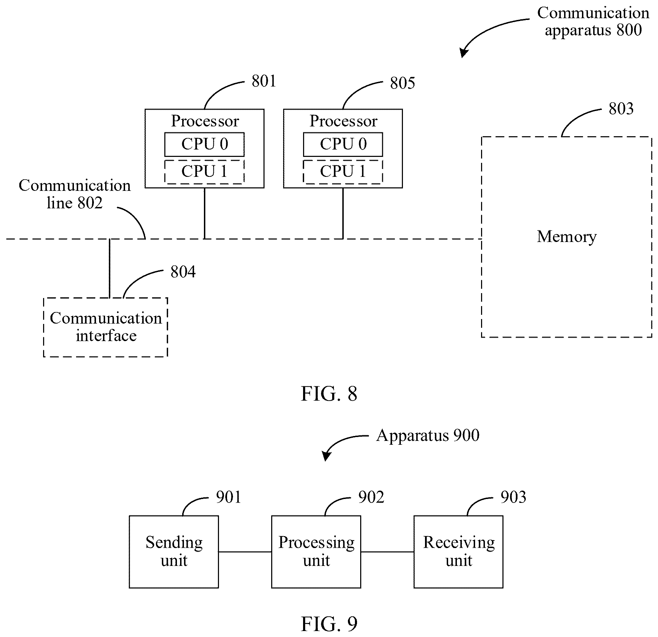

FIG. 8 is a diagram of a structure of a communication apparatus according to an embodiment of this application. A communication apparatus 800 may be the first UE or a circuit system of the first UE in the embodiment shown in any one of FIG. 5 to FIG. 7, and is configured to implement the method corresponding to the first UE in the foregoing method embodiment. Alternatively, the communication apparatus 800 may be the network device or a circuit system of the network device in the embodiment shown in any one of FIG. 5 to FIG. 7, and is configured to implement the method corresponding to the network device in the foregoing method embodiment. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803 configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path on which information is transferred between the foregoing components.

The communication interface 804 is any apparatus like a transceiver, and is configured to communicate with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or a data structure and that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution. The processor 801 is configured to execute the computer-executable instructions stored in the memory 803, to implement the steps performed by the first UE or the network device in the embodiment shown in any one of FIG. 5 to FIG. 7.

Optionally, the computer-executable instructions in this embodiment of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions). When the apparatus shown in FIG. 8 is a chip, for example, a chip of the first UE or a chip of the network device, the chip includes the processor 801 (and may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 9 is a diagram of an apparatus. An apparatus 900 may be the first UE or the network device in the foregoing method embodiments, or a chip of the first UE or a chip of the network device. The apparatus 900 includes a sending unit 901, a processing unit 902, and a receiving unit 903.

It should be understood that, the apparatus 900 may be configured to implement the steps performed by the first UE or the network device in the communication method in embodiments of this application. For related features, refer to the embodiment shown in any one of FIG. 5 to FIG. 7. Details are not described herein.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first UE or the network device in the foregoing method embodiments is implemented. In this way, functions in the foregoing embodiments may be implemented in a form of a software functional unit and sold or used as an independent product. Based on such an understanding, the technical solutions of this application essentially, the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first UE or the network device in any one of the foregoing method embodiments.

An embodiment of this application further provides a processing apparatus, including a processor and an interface. The processor is configured to perform the method performed by the first UE or the network device in any one of the foregoing method embodiments.

All or a part of the foregoing embodiments may be implemented by using software, hardware, firmware, or any combination thereof. When the software is used for implementation, all or a part of the functions of the functional units may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration. Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first UE and/or the network device may perform a part or all of the steps in embodiments of this application. The steps or operations are merely examples. In embodiments of this application, other operations or variations of various operations may be further performed. In addition, the steps may be performed in a sequence different from that presented in embodiments of this application, and not all operations in embodiments of this application may be performed.

## Claims

1. A communication method, applied to a first terminal device, wherein the method comprises:
sending first information to a network device, wherein the first information indicates an identifier of at least one second terminal device corresponding to the first terminal device, and the first terminal device performs multipath communication based on a non-3rd generation partnership project 3GPP communication interface between the first terminal device and the at least one second terminal device; and
receiving third information from the network device, wherein the third information indicates the identifier of the at least one second terminal device connected to the first terminal device based on the non-3GPP interface.

2. The method according to claim 1, wherein
the first information is comprised in capability information of the first terminal device;
the first information is comprised in user equipment UE assistance information; or
the first information is comprised in a measurement report.

3. The method according to claim 2, wherein the capability information further indicates that the first terminal device supports a capability of performing multipath communication based on a non-3GPP communication interface, or indicates that the first terminal device has a capability of UE aggregation.

4. The method according to claim 2 or 3, wherein the first information is comprised in the UE assistance information or comprised in the measurement report; and the method further comprises:
sending the capability information of the first terminal device to the network device, wherein the capability information indicates that the first terminal device supports a capability of performing multipath communication based on a non-3GPP communication interface.

5. The method according to any one of claims 1 to 4, wherein before sending the first information to the network device, the method further comprises:
receiving second information from the network device, wherein the second information is for requesting the capability information of the first terminal device, the second information is for configuring to allow the first terminal device to send the first information, or the second information is for configuring a condition for sending the first information by the first terminal device.

6. The method according to claim 5, wherein the condition for sending the first information by the first terminal device comprises one or more of the following items:
the first terminal device receives the second information from the network device;
a data volume to be transmitted by the first terminal device is greater than or equal to a first threshold;
a data transmission rate expected by the first terminal device is greater than or equal to a second threshold;
a status of a non-3GPP connection between the first terminal device and the at least one second terminal device changes;
the first terminal device has a valid non-3GPP connection;
the first terminal device has no valid non-3GPP connection;
a data transmission rate of a valid non-3GPP connection of the first terminal device is greater than or greater than or equal to a third threshold;
a data transmission rate of a valid non-3GPP connection of the first terminal device is less than a fourth threshold; or
a data transmission rate of the first terminal device is greater than or equal to a fifth threshold.

7. The method according to claim 6, wherein that the status of the non-3GPP connection between the first terminal device and the at least one second terminal device changes comprises one or more of the following items:
a data transmission rate of the non-3GPP connection between the first terminal device and the at least one second terminal device increases or decreases;
the non-3GPP connection between the first terminal device and the at least one second terminal device is disconnected;
the non-3GPP connection between the first terminal device and the at least one second terminal device fails;
the first terminal device expects to disconnect the non-3GPP connection between the first terminal device and the at least one second terminal device;
the first terminal device expects to change a terminal device participating in UE aggregation to the at least one second terminal device; or
a terminal device corresponding to a non-3GPP connection of the first terminal device is changed to the at least one second terminal device.

8. The method according to claim 6 or 7, wherein when the change of the status of the non-3GPP connection between the first terminal device and the at least one second terminal device comprises at least one of M items, that the first information indicates the identifier of the at least one second terminal device corresponding to the first terminal device comprises:
the first information does not comprise the identifier of the at least one second terminal device;
the first information comprises the identifier of the at least one second terminal device; or
the first information comprises a bitmap, and a value of a bit that is in the bitmap and that corresponds to the at least one second terminal device is a first value, wherein
the M items comprise:
a transmission rate of the non-3GPP connection between the first terminal device and the at least one second terminal device increases or decreases;
the non-3GPP connection between the first terminal device and the at least one second terminal device is disconnected;
the non-3GPP connection between the first terminal device and the at least one second terminal device fails; or
the first terminal device expects to disconnect the non-3GPP connection between the first terminal device and the at least one second terminal device.

9. The method according to any one of claims 5 to 8, wherein the second information is comprised in a first RRC message, wherein
the first RRC message comprises an other configuration OtherConfig information element, and the second information is comprised in the OtherConfig information element; or
the first RRC message comprises measurement configuration information, and the second information is comprised in the measurement configuration information.

10. A communication method, applied to a network device, wherein the method comprises:
receiving first information from a first terminal device, wherein the first information indicates an identifier of at least one second terminal device corresponding to the first terminal device, and the first terminal device performs multipath communication based on a non-3GPP communication interface between the first terminal device and the at least one second terminal device; and
sending third information to the first terminal device, wherein the third information indicates the identifier of the at least one second terminal device connected to the first terminal device based on the non-3GPP interface.

11. The method according to claim 10, wherein
the first information is comprised in capability information of the first terminal device;
the first information is comprised in UE assistance information; or
the first information is comprised in a measurement report.

12. The method according to claim 11, wherein the capability information further indicates that the first terminal device supports a capability of performing multipath communication based on a non-3GPP communication interface, or indicates that the first terminal device has a capability of UE aggregation.

13. The method according to claim 11 or 12, wherein the first information is comprised in the UE assistance information or comprised in the measurement report; and the method further comprises:
receiving the capability information from the first terminal device, wherein the capability information indicates that the first terminal device supports a capability of performing multipath communication based on a non-3GPP communication interface.

14. The method according to any one of claims 10 to 13, wherein before receiving the first information from the first terminal device, the method further comprises:
sending second information to the first terminal device, wherein the second information is for requesting the capability information of the first terminal device, the second information is for configuring to allow the first terminal device to send the first information, or the second information is for configuring a condition for sending the first information by the first terminal device.

15. The method according to claim 14, wherein the condition for sending the first information by the first terminal device comprises one or more of the following items:
the first terminal device receives the second information from the network device;
a data volume to be transmitted by the first terminal device is greater than or equal to a first threshold;
a data transmission rate expected by the first terminal device is greater than or equal to a second threshold;
a status of a non-3GPP connection between the first terminal device and the at least one second terminal device changes;
the first terminal device has a valid non-3GPP connection;
the first terminal device has no valid non-3GPP connection;
a data transmission rate of a valid non-3GPP connection of the first terminal device is greater than or greater than or equal to a third threshold;
a data transmission rate of a valid non-3GPP connection of the first terminal device is less than a fourth threshold; or
a data transmission rate of the first terminal device is greater than or equal to a fifth threshold.

16. The method according to claim 15, wherein that the status of the non-3GPP connection between the first terminal device and the at least one second terminal device changes comprises one or more of the following items:
a data transmission rate of the non-3GPP connection between the first terminal device and the at least one second terminal device increases or decreases;
the non-3GPP connection between the first terminal device and the at least one second terminal device is disconnected;
the non-3GPP connection between the first terminal device and the at least one second terminal device fails;
the first terminal device expects to disconnect the non-3GPP connection between the first terminal device and the at least one second terminal device;
the first terminal device expects to change a terminal device participating in UE aggregation to the at least one second terminal device; or
a terminal device corresponding to a non-3GPP connection of the first terminal device is changed to the at least one second terminal device.

17. The method according to claim 15 or 16, wherein when the change of the status of the non-3GPP connection between the first terminal device and the at least one second terminal device comprises at least one of M items, that the first information indicates the identifier of the at least one second terminal device corresponding to the first terminal device comprises:
the first information does not comprise the identifier of the at least one second terminal device;
the first information comprises the identifier of the at least one second terminal device; or
the first information comprises a bitmap, and a value of a bit that is in the bitmap and that corresponds to the at least one second terminal device is a first value, wherein
the M items comprise:
a transmission rate of the non-3GPP connection between the first terminal device and the at least one second terminal device increases or decreases;
the non-3GPP connection between the first terminal device and the at least one second terminal device is disconnected;
the non-3GPP connection between the first terminal device and the at least one second terminal device fails; or
the first terminal device expects to disconnect the non-3GPP connection between the first terminal device and the at least one second terminal device.

18. The method according to any one of claims 14 to 17, wherein the second information is comprised in a first RRC message, wherein
the first RRC message comprises an OtherConfig information element, and the second information is comprised in the OtherConfig information element; or
the first RRC message comprises measurement configuration information, and the second information is comprised in the measurement configuration information.

19. The method according to any one of claims 10 to 18, wherein the method further comprises:
sending fourth information to a part or all of the at least one second terminal device, wherein the fourth information indicates to perform UE aggregation with the first terminal device.

20. A communication apparatus, wherein the communication apparatus comprises a processing unit and a transceiver unit, and the processing unit is coupled to the transceiver unit, to perform the method according to any one of claims 1 to 9, or perform the method according to any one of claims 10 to 19.

21. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 9, or cause the communication apparatus to perform the method according to any one of claims 10 to 19.

22. A computer-readable storage medium, wherein the computer-readable storage medium is configured to store a computer program, and when the computer program is run on a computer, the computer is caused to perform the method according to any one of claims 1 to 9, or the computer is caused to perform the method according to any one of claims 10 to 19.

23. A computer program product, wherein the computer program product comprises a computer program, and when the computer program is run on a computer, the computer is caused to perform the method according to any one of claims 1 to 9, or the computer is caused to perform the method according to any one of claims 10 to 19.

24. A chip system, wherein the chip system comprises:
a processor and an interface, wherein the processor is configured to invoke instructions from the interface and run the instructions, and when the processor executes the instructions, the method according to any one of claims 1 to 9 is implemented, or the method according to any one of claims 10 to 19 is implemented.

25. A communication system, wherein the communication system comprises a first terminal device and a network device, wherein
the first terminal device is configured to perform the method according to any one of claims 1 to 9; and
the network device is configured to perform the method according to any one of claims 10 to 19.
